# EUROPEAN PATENT SPECIFICATION

(11) **EP 3 669 623 B1**
(45) Date of publication and mention of the grant of the patent: **10.05.2023**
(21) Application number: 19217121.3
(22) Date of filing: 17.12.2019
(51) Int. Cl.: B60D 1/04, B60D 1/46, B60D 1/62, A01B 59/043, A01B 59/06

(54) **TOWING DEVICE FOR AN AGRICULTURAL OR INDUSTRIAL VEHICLE**
SCHLEPPVORRICHTUNG FÜR EIN LANDWIRTSCHAFTLICHES ODER INDUSTRIELLES FAHRZEUG
DISPOSITIF DE REMORQUAGE POUR UN VÉHICULE AGRICOLE OU INDUSTRIEL

(30) Priority: 17.12.2018 IT 201800011187
(43) Date of publication of application: 24.06.2020
(73) Proprietor: CBM - S.P.A., 41122 Modena (IT)
(72) Inventor: Cornia, Enrico Maria, 41122 Modena (IT)
(74) Representative: Zoli, Filippo

(56) References cited:
- EP-A1- 1 974 963
- EP-A1- 2 103 458
- EP-A1- 3 222 129
- EP-A2- 0 308 271
- GB-A- 2 380 720

## Description

The present invention relates to a towing device for an agricultural or industrial vehicle.

Towing devices for agricultural or industrial vehicles, conventionally called pick up hitches, generally consist of a fixed frame, which can be associated with the towing vehicle, and of a movable frame connected thereto, which supports a hooking element to the auxiliary apparatus to be towed.

In particular, the hooking element can be moved between a retracted position and an extended position with respect to the fixed frame.

More in detail, the movable frame is moved in order to bring the hooking element to the extended position and allow it to be engaged with the auxiliary apparatus to be towed, and then to the retracted position to tow the auxiliary apparatus.

In order to ensure the correct execution of the towing phase and the operators' safety, the towing device is provided with locking means adapted to prevent, during this phase, the movable frame from moving with respect to the fixed frame.

In the towing devices of known type, the locking means are made up of a hook-shaped locking element, associated with the fixed frame which engages with a gripping element of the type of a pin, associated with the movable frame, when the latter switches to the closed position.

The locking element is movable by rotation with respect to the fixed frame, on a relative axis, and the mutual interaction between the locking element and the gripping element constrains the two elements together and allows the movable frame to remain in the closed position and transfers the tensile force of the hooking element onto the fixed frame.

These traction devices of known type do have some drawbacks.

In particular, these devices do not allow for the safe indication of the locking having occurred and often the operator needs to visually check that the locking element is actually engaged with the gripping element and therefore able to perform the towing operation in a safe manner.

In fact, the locking means are often positioned inside the frame of the towing device, or hidden by other components, thus preventing the possibility of a visual check of their status.

Furthermore, known towing devices, especially during the actual towing operation, do not allow the operator to promptly check that the auxiliary apparatus to be towed is correctly hooked, with possible safety risks.

GB 2 380 720, EP 1 974 963, EP 3 222 129 discloses towing devices having a fixed frame associable with an agricultural or industrial vehicle, a movable frame connected to the fixed frame and supporting one hooking element 24 intended to engage with an auxiliary apparatus to be towed. The movable frame can be moved with respect to the fixed frame between one open position and one closed position and the towing device is provided with locking means of the movable frame with respect to the fixed frame.

The main aim of the present invention is to devise a towing device for an agricultural or industrial vehicle that allows the operator to be promptly informed about the correct operation of the locking means, i.e. the engagement of the locking element with the gripping element.

Within this aim, one object of the present invention is to devise a towing device for an agricultural or industrial vehicle that allows operating under conditions of greater safety than the devices of known type.

Another object of the present invention is to devise a towing device for an agricultural or industrial vehicle that allows overcoming the aforementioned drawbacks of the prior art in a simple, rational, easy, effective to use and low cost solution.

The aforementioned objects are achieved by the present towing device for an agricultural or industrial vehicle according to claim 1.

Other characteristics and advantages of the present invention will be more evident from the description of a preferred, but not exclusive, embodiment of a towing device for an agricultural or industrial vehicle, illustrated as an indication, but not limited to, in the attached tables of drawings in which:

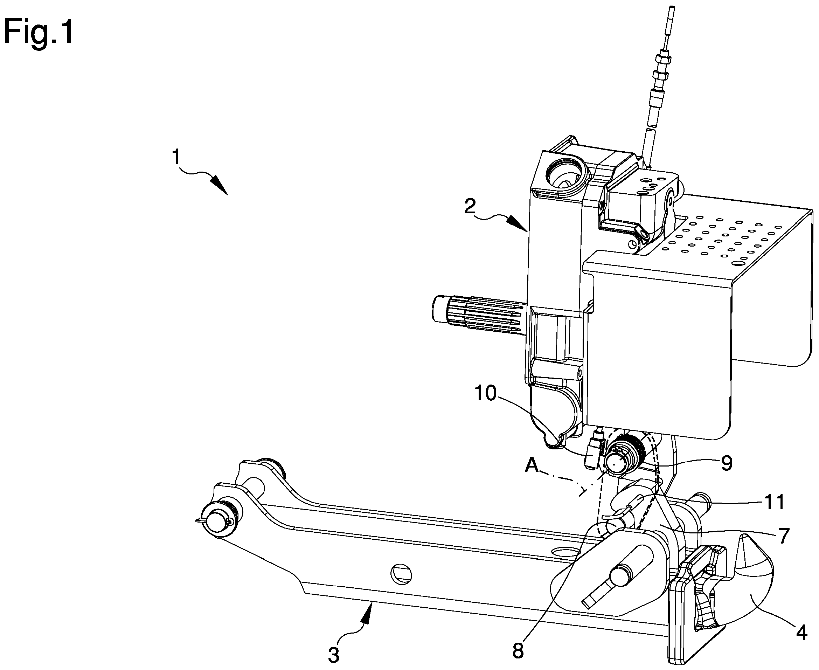

Figure 1 is a perspective view of an embodiment of the towing device according to the invention;

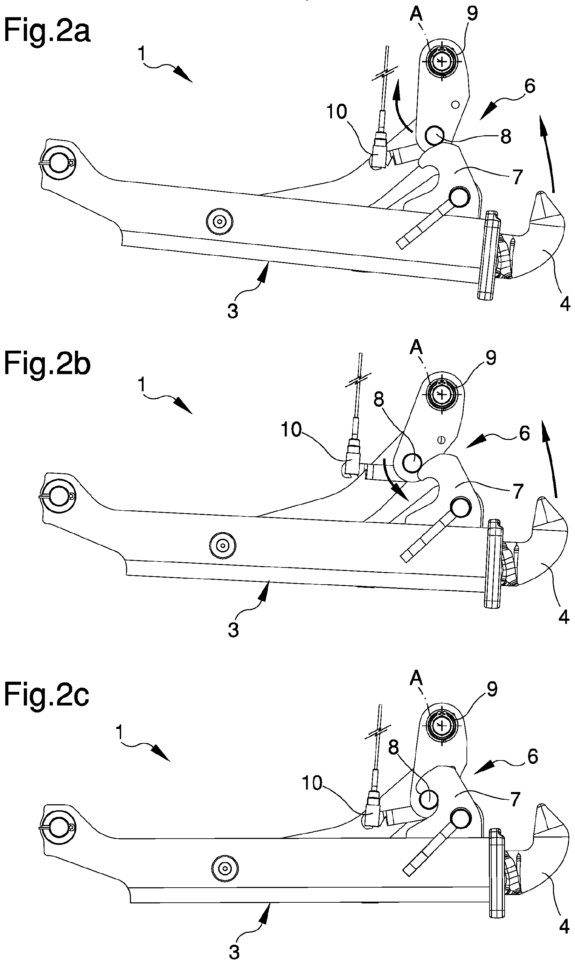

Figure 2a is a side view of the towing device in a configuration of use;
Figure 2b is a side view of the towing device in Figure 2a in a further configuration of use;
Figure 2c is a side view of the towing device in Figure 2a in a towing configuration;

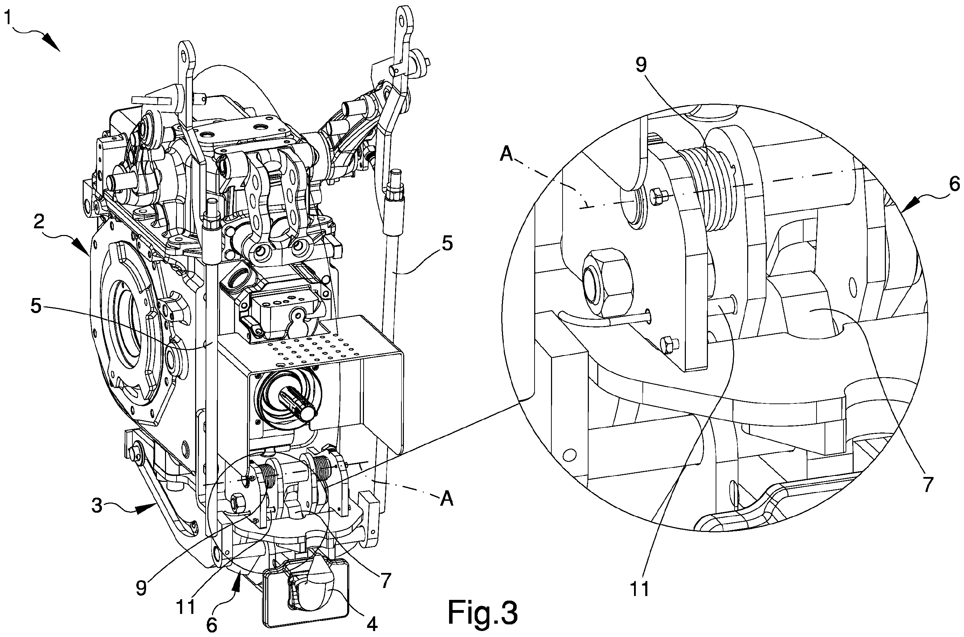

Figure 3 is a perspective view of a further embodiment of the towing device according to the invention.

With particular reference to these figures, reference numeral 1 globally indicates a towing device for an agricultural or industrial vehicle.

The towing device 1 for an agricultural or industrial vehicle comprises a fixed frame 2 associable with an agricultural or industrial vehicle and a movable frame 3 kinematically connected to the fixed frame 2, supporting at least one hooking element 4 intended to engage with an auxiliary apparatus to be towed.

More particularly, the movable frame 3 can be moved between an open position, in which it is rotated so as to be inclined with respect to the fixed frame 2, and a closed position, in which it is approached to the fixed frame 2. In the closed position the two frames 2 and 3 are substantially aligned with each other.

At the same time, the hooking element 4 can be moved between an extended position, in which it is moved away with respect to the fixed frame 2 to engage or disengage with the auxiliary apparatus, and a retracted position, in which it is approached to the fixed frame 2, to tow the auxiliary apparatus.

More in detail, the hooking element 4 displaces between an engagement/disengagement configuration, in which it is in the extended position, with the movable frame 3 in the open position, and a towing configuration, in which it is in the retracted position, with the movable frame 3 in the closed position.

The device 1 also comprises movement means 5 responsible for the movement of the movable frame 3 with respect to the fixed frame 2.

The device 1 then comprises locking means 6 of the movable frame 3 with respect to the fixed frame 2, when the hooking element 4 is in the towing configuration, to allow the towing operation.

The locking means 6 are adapted to transmit the tensile force of the hooking element 4 to the fixed frame 2 through the movable frame 3.

According to an embodiment of the invention, the locking means 6 comprise at least one hook-shaped locking element 7, locked together with the movable frame 3 and at least one gripping element 8, of the type of a pin, associated with the fixed frame 2 in a movable manner and engageable by the locking element 7 following the achievement of the towing configuration by the movable frame 3.

Advantageously, the gripping element 8 is hinged around a relative axis A to the fixed frame 2, and is consequently movable, between a rest position in which it is engaged with the locking element 7 or free when the movable frame 3 is in the open position, and at least one work position in which it is rotated with respect to the axis A.

More particularly, during at least one stretch of the displacement of the hooking element 4 towards the towing configuration, the gripping element 8 can be moved in rotation around the axis A in a first direction due to the interaction with the locking element 7, in the work position.

In practice, during the displacement of the hooking element 4 towards the towing configuration, the locking element 7 pushes the gripping element 8 upwards which, by means of the hinging to the fixed frame 2, is able to rotate towards the work position and free the passage of the locking element 7.

The locking means 6 also comprise elastic means 9 associated with the gripping element 8 and adapted to push it towards the rest position.

In particular, the gripping element 8 is movable around the axis A along said first direction in contrast to the elastic means 9.

The elastic means 9 then tend to bring the gripping element 8 back to the rest position, in which it engages with the locking element 7, following the achievement of the towing configuration by the hooking element 4.

The elastic means 9 can be of the type of torsion springs.

Appropriately, the towing device 1 also comprises deactivation means 10 of the locking means 6 adapted to allow the displacement of the hooking element 4 from the towing configuration to the engagement/disengagement configuration. The deactivation means 10 thus release the locking element 7 from the engagement with the gripping element 8 and allow for the relevant movement of the movable frame 3.

Advantageously, the deactivation means 10 are kinematically connected to the gripping element 8 to displace it away from the rest position when it is engaged with the locking element 7.

When, in fact, the gripping element 8 is engaged with the locking element 7, the movable frame 3 can be moved to the open position by means of such deactivation means 10 which, by applying a force on the gripping element 8, allow the frame to rotate towards the work position, in contrast to the elastic means 9, thus releasing the locking element 7.

In order to facilitate the rotation of the gripping element 8, the movable frame 3 can be partly lifted by appropriate movement means 5, so that the gripping element 8 is released from the engagement with the locking element 7 and therefore free to rotate.

In this phase, in fact, the weight of the movable frame 3 weighs on the gripping element 8 which, constrained to the locking element 7 to allow the towing operation being carried out safely, would not be able to rotate easily.

Conveniently, the device 1 also comprises sensor means 11, of the inductive type, which are adapted to detect the locking of the movable frame 3 with respect to the fixed frame 2, in order to operate safely.

In fact, the sensor means 11 are associated with the fixed frame 2, are fixed with respect to the gripping element 8 and are adapted to detect the position thereof with respect to the fixed frame 2.

According to the claimed invention, the sensor means 11 are adapted to send a signal to the electronic control unit when they detect that the gripping element 8 is in its rest position.

According to the claimed invention, the device 1 also comprises at least one electronic control unit operationally connected to the sensor means 11 and to the hooking element 4 and adapted to detect when the latter is in the towing configuration.

This way, the operator is constantly aware of the configuration of the hooking element 4 and is possibly able to intervene promptly in case of an emergency. More in detail, when the operator detects that the hooking element 4 is in the towing configuration and that the gripping element 8 is in the rest position, this means that the locking element 7 is engaged with the gripping element itself. The operation of the present invention is as follows.

In order to tow a vehicle, and then to couple the hooking element 4 to the auxiliary apparatus to be towed, the operator brings the hooking element 4 to the engagement/disengagement configuration.

To do this, the deactivation means 10 are operated and the gripping element 8 is then rotated towards the work position, in contrast to the elastic means 9.

The sensor means 11 inform the operator of a change in the status of the locking means 6, in particular they inform of the displacement of the gripping element 8 from the rest position.

After the locking means 6 have been released, the movable frame 3 can be moved and the hooking element 4 is able to reach the engagement/disengagement configuration in which it can intercept the auxiliary apparatus to be towed.

Finally, once connected to the auxiliary apparatus, the movable frame 3 is brought back to the closed position, and again anchored to the fixed frame 2 by means of the locking means 6.

During this displacement to reach the towing configuration, the locking element 7 gradually approaches the gripping element 8 until it interacts therewith, displacing it from the rest position towards a work position.

At this point, the sensor means 11 inform the operator of the fact that the gripping element 8 has been moved away from the rest position.

During this phase, the elastic means 9 are subjected to a force and, when the movable frame 3 reaches the retracted configuration, they bring the gripping element 8 back to the rest position in which it engages with the locking element 7.

The sensor means 11 detect again the presence of the gripping element 8 in the rest position and inform the electronic control unit.

It is specified that when the hooking element 4 is in the towing configuration, the gripping element 8 only reaches the rest position after engagement with the locking element 7.

Finally, the movable frame 3 is anchored to the fixed frame 2 and the vehicle is ready to tow the auxiliary apparatus, in which the tensile force is transferred from the locking means 6 to the fixed frame 2.

It has in practice been ascertained that the described invention achieves the intended objects and, in particular, the fact is underlined that the towing device 1 for an agricultural or industrial vehicle allows the locking operation of the movable frame 3 to the fixed frame 2 to be carried out properly, so as to transfer the tensile force of the hooking element 4.

Moreover, the towing device 1 for an agricultural or industrial vehicle allows informing the operator of the mutual position and, therefore, the correct operation of the locking means 6, in a direct and safe way.

Finally, for the aforementioned reasons, the towing device 1 for an agricultural or industrial vehicle allows the operator to carry out the towing operation under safer conditions than the towing devices of known type.

## Claims

1. Towing device (1) for an agricultural or industrial vehicle, comprising:
- a fixed frame (2) associable with an agricultural or industrial vehicle;
- a movable frame (3) kinematically connected to said fixed frame (2) and supporting at least one hooking element (4) intended to engage with an auxiliary apparatus to be towed, wherein said movable frame (3) can be moved with respect to said fixed frame (2) between at least one open position and one closed position and said hooking element (4) can be moved between an extended position, in which it is moved away with respect to said fixed frame (2) to engage or disengage with the auxiliary apparatus, and a retracted position, in which it is approached to said fixed frame (2), to tow the auxiliary apparatus;
- locking means (6) of said movable frame (3) with respect to said fixed frame (2), in the closed position;
wherein said locking means (6) comprise at least one locking element (7) locked together with said movable frame (3) and at least one gripping element (8) associated with said fixed frame (2) in a movable manner and engageable by said locking element (7) following the achievement of the closed position by said movable frame (3);
wherein the device comprises sensor means (11) adapted to detect the locking of said movable frame (3) with respect to said fixed frame (2), wherein said sensor means (11) are associated with said fixed frame (2) and are adapted to detect the position of said gripping element (8), and
it comprises at least one electronic control unit operationally connected to said sensor means (11) and to said hooking element (4) and adapted to detect when the latter is in towing configuration, said sensor means (11) are adapted to send a signal to said electronic control unit when said gripping element (8) is in the rest position,
**characterized by** the fact that said sensor means (11) are fixed with respect to said gripping element (8).

2. Device (1) according to claim 1, **characterized by** the fact that said gripping element (8) is hinged around a relative axis (A) to said fixed frame (2).

3. Device (1) according to claim 1 or 2, **characterized by** the fact that said gripping element (8) can be moved in rotation around said axis (A) in a first direction due to the interaction with said locking element (7) during at least one stretch of the displacement of said hooking element (4) towards the towing configuration.

4. Device (1) according to claim 3, **characterized by** the fact that said locking means (6) comprise elastic means (9) associated with said gripping element (8) and adapted to push it towards a rest position, said gripping element (8) being movable around said axis (A) along said first direction in contrast to said elastic means (9), away from the rest position, in which it engages with the locking element (7), following the achievement of the towing configuration by said hooking element (4).

5. Device (1) according to one or more of the preceding claims, **characterized by** the fact that it comprises deactivation means (10) of said locking means (6) adapted to allow the displacement of said hooking element (4) from the towing configuration to the engagement/disengagement configuration.

6. Device (1) according to claim 5, **characterized by** the fact that said deactivation means (10) are kinematically connected to said gripping element (8) to move it away from the rest position following the engagement with said locking element (7).

7. Device (1) according to one or more of the preceding claims, **characterized by** the fact that said sensor means (11) are of the inductive type.

## Patentansprüche

1. Schleppvorrichtung (1) für ein landwirtschaftliches oder industrielles Fahrzeug, umfassend:
- einen festen Rahmen (2), der einem landwirtschaftlichen oder industriellen Fahrzeug zuordenbar ist;
- einen beweglichen Rahmen (3), der kinematisch mit dem festen Rahmen (2) verbunden ist und mindestens ein Hakenelement (4) trägt, das dazu bestimmt ist, mit einem zu ziehenden Hilfsgerät in Eingriff zu treten, wobei der bewegliche Rahmen (3) in Bezug auf den festen Rahmen (2) zwischen mindestens einer offenen Position und einer geschlossenen Position bewegt werden kann und das Hakenelement (4) zwischen einer ausgefahrenen Position, in der es in Bezug auf den festen Rahmen (2) wegbewegt ist, um mit dem Hilfsgerät in Eingriff zu treten oder sich davon zu lösen, und einer eingefahrenen Position bewegt werden kann, in der es dem festen Rahmen (2) angenähert ist, um das Hilfsgerät zu ziehen;
- Verriegelungsmittel (6) des beweglichen Rahmens (3) in Bezug auf den festen Rahmen (2) in der geschlossenen Position;
wobei die Verriegelungsmittel (6) mindestens ein Verriegelungselement (7), das zusammen mit dem beweglichen Rahmen (3) verriegelt ist, und mindestens ein Greifelement (8) umfassen, das dem festen Rahmen (2) in beweglicher Weise zugeordnet ist und mit dem Verriegelungselement (7) in Eingriff bringbar ist, nachdem der bewegliche Rahmen (3) die geschlossene Position erreicht hat;
wobei die Vorrichtung Sensormittel (11) umfasst, die ausgebildet sind, die Verriegelung des beweglichen Rahmens (3) in Bezug auf den festen Rahmen (2) zu erfassen, wobei die Sensormittel (11) dem festen Rahmen (2) zugeordnet und ausgebildet sind, die Position des Greifelements (8) zu erfassen, und
sie mindestens eine elektronische Steuereinheit umfasst, die betriebsmäßig mit den Sensormitteln (11) und dem Hakenelement (4) verbunden und ausgebildet ist, zu erkennen, wenn letzteres sich in der Schleppkonfiguration befindet, wobei die Sensormittel (11) ausgebildet sind, ein Signal an die elektronische Steuereinheit zu senden, wenn das Greifelement (8) in der Ruheposition ist,
**dadurch gekennzeichnet, dass** die Sensormittel (11) in Bezug auf das Greifelement (8) fixiert sind.

2. Vorrichtung (1) nach Anspruch 1, **dadurch gekennzeichnet, dass** das Greifelement (8) um eine relative Achse (A) an dem festen Rahmen (2) angelenkt ist.

3. Vorrichtung (1) nach Anspruch 1 oder 2, **dadurch gekennzeichnet, dass** das Greifelement (8) aufgrund der Wechselwirkung mit dem Verriegelungselement (7) während mindestens einer Strecke der Verschiebung des Hakenelements (4) in Richtung der Schleppkonfiguration um die Achse (A) in einer ersten Richtung gedreht werden kann.

4. Vorrichtung (1) nach Anspruch 3, **dadurch gekennzeichnet, dass** die Verriegelungsmittel (6) elastische Mittel (9) umfassen, die dem Greifelement (8) zugeordnet und ausgebildet sind, es in eine Ruheposition zu drücken, wobei das Greifelement (8) um die Achse (A) entlang der ersten Richtung entgegen den elastischen Mitteln (9) weg von der Ruheposition beweglich ist, in der es mit dem Verriegelungselement (7) in Eingriff steht, nach Erreichen der Schleppkonfiguration durch das Hakenelement (4).

5. Vorrichtung (1) nach einem oder mehreren der vorhergehenden Ansprüche, **dadurch gekennzeichnet, dass** sie Mittel (10) zur Deaktivierung der Verriegelungsmittel (6) umfasst, die ausgebildet sind, die Verschiebung des Hakenelements (4) von der Schleppkonfiguration in die Eingriffs-/Lösekonfiguration erlauben.

6. Vorrichtung (1) nach Anspruch 5, **dadurch gekennzeichnet, dass** die Deaktivierungsmittel (10) kinematisch mit dem Greifelement (8) verbunden sind, um es nach dem Eingriff mit dem Verriegelungselement (7) weg von der Ruhestellung zu bewegen.

7. Vorrichtung (1) nach einem oder mehreren der vorhergehenden Ansprüche, **dadurch gekennzeichnet, dass** die Sensormittel (11) von der induktiven Art sind.

## Revendications

1. - Dispositif de remorquage (1) pour un véhicule agricole ou industriel, comprenant :
- un cadre fixe (2) apte à être associé à un véhicule agricole ou industriel ;
- un cadre mobile (3) relié cinématiquement audit cadre fixe (2) et supportant au moins un élément d'accrochage (4) destiné à s'engager avec un appareil auxiliaire à remorquer, ledit cadre mobile (3) pouvant être déplacé par rapport audit cadre fixe (2) entre au moins une position ouverte et une position fermée et ledit élément d'accrochage (4) pouvant être déplacé entre une position étendue, dans laquelle il est déplacé à distance dudit cadre fixe (2) pour s'engager avec l'appareil auxiliaire ou se désengager de celui-ci, et une position rétractée, dans laquelle il est rapproché dudit cadre fixe (2), pour remorquer l'appareil auxiliaire ;
- des moyens de verrouillage (6) dudit cadre mobile (3) par rapport audit cadre fixe (2), dans la position fermée ;
lesdits moyens de verrouillage (6) comprenant au moins un élément de verrouillage (7) verrouillé conjointement avec ledit cadre mobile (3) et au moins un élément de saisie (8) associé audit cadre fixe (2) d'une manière mobile et apte à être engagé par ledit élément de verrouillage (7) suite à l'arrivée à la position fermée par ledit cadre mobile (3) ; le dispositif comprenant des moyens de détection (11) agencés pour détecter le verrouillage dudit cadre mobile (3) par rapport audit cadre fixe (2), lesdits moyens de détection (11) étant associés audit cadre fixe (2) et agencés pour détecter la position dudit élément de saisie (8), et le dispositif comprenant au moins une unité de commande électronique connectée de manière fonctionnelle auxdits moyens de détection (11) et audit élément d'accrochage (4) et agencée pour détecter lorsque ce dernier est en configuration de remorquage, lesdits moyens de détection (11) étant agencés pour envoyer un signal à ladite unité de commande électronique lorsque ledit élément de saisie (8) est en position de repos,
**caractérisé par le fait que** lesdits moyens de détection (11) sont fixes par rapport audit élément de saisie (8).

2. - Dispositif (1) selon la revendication 1, **caractérisé par le fait que** ledit élément de saisie (8) est articulé autour d'un axe relatif (A) audit cadre fixe (2).

3. - Dispositif (1) selon la revendication 1 ou 2, **caractérisé par le fait que** ledit élément de saisie (8) peut être déplacé en rotation autour dudit axe (A) dans une première direction en raison de l'interaction avec ledit élément de verrouillage (7) pendant au moins un tronçon du déplacement dudit élément d'accrochage (4) vers la configuration de remorquage.

4. - Dispositif (1) selon la revendication 3, **caractérisé par le fait que** lesdits moyens de verrouillage (6) comprennent des moyens élastiques (9) associés audit élément de saisie (8) et agencés pour pousser celui-ci vers une position de repos, ledit élément de saisie (8) étant mobile autour dudit axe (A) selon ladite première direction à l'inverse desdits moyens élastiques (9), s'éloignant de la position de repos, dans laquelle il s'engage avec l'élément de verrouillage (7), suite à l'arrivée à la configuration de remorquage par ledit élément d'accrochage (4) .

5. - Dispositif (1) selon l'une ou plusieurs des revendications précédentes, **caractérisé par le fait qu'**il comprend des moyens de désactivation (10) desdits moyens de verrouillage (6) agencés pour permettre le déplacement dudit élément d'accrochage (4) de la configuration de remorquage à la configuration d'engagement/désengagement.

6. - Dispositif (1) selon la revendication 5, **caractérisé par le fait que** lesdits moyens de désactivation (10) sont reliés cinématiquement audit élément de saisie (8) pour l'éloigner de la position de repos suite à l'engagement avec ledit élément de verrouillage (7).

7. - Dispositif (1) selon une ou plusieurs des revendications précédentes, **caractérisé par le fait que** lesdits moyens de détection (11) sont du type inductif.
